# EUROPEAN PATENT SPECIFICATION

(11) **EP 3 124 877 B1**
(45) Date of publication and mention of the grant of the patent: **28.11.2018**
(21) Application number: 16181958.6
(22) Date of filing: 29.07.2016
(51) Int. Cl.: F24D 11/00, F24D 19/10, G05B 1/00

(54) **HOT WATER HEATING DEVICE**
WASSERERWÄRMUNGSVORRICHTUNG
DISPOSITIF DE CHAUFFAGE D'EAU

(30) Priority: 29.07.2015 JP 2015149109
(43) Date of publication of application: 01.02.2017
(73) Proprietor: Panasonic Intellectual Property Management Co., Ltd., Osaka-shi, Osaka 540-6207 (JP)
(72) Inventor: FUJIMOTO, Takanobu, Osaka, 540-6207 (JP); TAKIZAWA, Sadahiro, Osaka, 540-6207 (JP)
(74) Representative: Eisenführ Speiser

(56) References cited:
- DE-A1- 2 452 515
- DE-A1- 2 757 934
- DE-A1- 3 030 565
- DE-B1- 2 813 081
- JP-A- 2014 077 589
- US-A- 4 171 771

## Description

### BACKGROUND

### Technical Field

The present disclosure relates to a hot water heating device.

### Description of the Related Art

There have been conventionally proposed hot water heating devices which include a heat exchanger for supplying heat to hot water to be conveyed to a heating terminal such as a floor heating, and in which a heat quantity to be supplied to the heat exchanger is changed to adjust a temperature of the hot water to be conveyed to the heating terminal.

FIG. 2 shows a conventional hot water heating device described in PTL 1 (Unexamined Japanese Patent Publication No. 2014-077589).

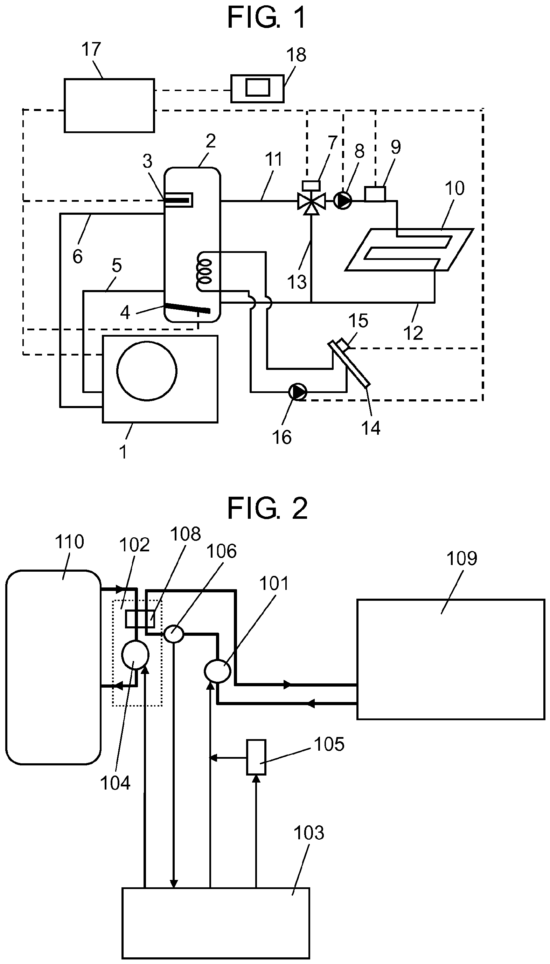

As shown in FIG. 2, the conventional hot water heating device includes hot water storage tank 110, heating circuit 109, heat exchanger 108 which supplies a heat quantity held by hot water in hot water storage tank 110 to hot water to be conveyed to heating circuit 109, and second circulation unit 104 (heat circulating pump) which conveys hot water in hot water storage tank 110 to heat exchanger 108. Further, the conventional hot water heating device includes first circulation unit 101 (heating water circulating pump) which conveys hot water heated by heat exchanger 108 to heating circuit 109, heating temperature detector 106 which detects a temperature of hot water which is heated by heat exchanger 108 and is to be conveyed to heating circuit 109, and microcomputer 103.

Microcomputer 103 adjusts a temperature of hot water to be conveyed to heating circuit 109 by intermittently driving second circulation unit 104 (heat circulating pump) based on a detection value of heating temperature detector 106.

However, in the above conventional configuration, a heat quantity held by hot water in hot water storage tank 110 is supplied to hot water to be conveyed to a heating terminal such as a floor heating via heat exchanger 108. Therefore, when a large heating capacity is required by a heating terminal such as a floor heating, there occurs a problem that heat exchange efficiency is reduced.

A hot water heating device according to the preamble of claim 1 is also known from DE patent application 27 57 934, which discloses a boiler system with a heat accumulator filled with boiler water, and a pressureless vessel for receiving expansion water. A pressureless vessel which is air free under a foil lying pressure-free on the water, and which is provided with an overfill protection device, is connected to the boiler. The pressureless vessel is separable from the boiler when receiving a shut-off signal from a shut-off device by responding to a safety temperature sensor. The boiler provided with a safety valve is connected with a second, non-closable expansion vessel, namely a diaphragm pressure vessel.

### SUMMARY

The present disclosure aims to solve the above conventional problem and an object thereof is to provide a hot water heating device with improved heat exchange efficiency.

In order to solve the above conventional problem, a hot water heating device of the present disclosure includes a heat source machine, a hot water storage tank which stores hot water heated by the heat source machine, a heating terminal having a heating function, a circulating pump which circulates hot water between the hot water storage tank and the heating terminal, and a mixing device which mixes the hot water to be conveyed from the hot water storage tank to the heating terminal with hot water whose heat has been dissipated at the heating terminal. The hot water heating device of the present disclosure further includes a temperature detector provided at a downstream side of the mixing device for detecting a temperature of the hot water circulating between the hot water storage tank and the heating terminal, and a control device. The control device stops driving of the circulating pump when the temperature detector detects a predetermined temperature or above.

With this configuration, since hot water is directly conveyed from the hot water storage tank side to the heating terminal side, heat exchange efficiency can be increased. Further, even when the mixing device develops an operation failure for some reason or other to supply hot water having a high temperature to the heating terminal, because the temperature detector is provided at the downstream side of the mixing device, the hot water having a high temperature being supplied to the heating terminal can be reliably detected to stop driving of the circulating pump. This enables provision of a hot water heating device with improved safety.

According to the present disclosure, a hot water heating device which has improved heat exchange efficiency as well as improved safety can be provided.

### BRIEF DESCRIPTION OF THE DRAWINGS

FIG. 1 is a view of a configuration of a hot water heating device according to a first exemplary embodiment of the present disclosure; and
FIG. 2 is a view of a configuration of a conventional hot water heating device.

### DETAILED DESCRIPTION

A hot water heating device according to a first aspect of the present disclosure includes a heat source machine, a hot water storage tank which stores hot water heated by the heat source machine, a heating terminal having a heating function, a circulating pump which circulates hot water between the hot water storage tank and the heating terminal, and a mixing device which mixes the hot water to be conveyed from the hot water storage tank to the heating terminal with hot water whose heat has been dissipated at the heating terminal. The hot water heating device further includes a temperature detector provided at a downstream side of the mixing device for detecting a temperature of the hot water circulating between the hot water storage tank and the heating terminal, and a control device. The control device stops driving of the circulating pump when the temperature detector detects a predetermined temperature or above.

With this configuration, since hot water is directly conveyed from the hot water storage tank side to the heating terminal side, heat exchange efficiency can be increased. Further, even when the mixing device develops an operation failure for some reason or other to supply hot water having a high temperature to the heating terminal, because the temperature detector is provided at the downstream side of the mixing device, the hot water having a high temperature being supplied to the heating terminal can be reliably detected to stop driving of the circulating pump. This enables provision of a hot water heating device with improved safety.

A second aspect of the present disclosure is particularly directed to the hot water heating device according to the first aspect, wherein the temperature detector is provided at the downstream side of the mixing device and at an upstream side of the heating terminal.

Even when the mixing device develops an operation failure for some reason or other to supply hot water having a high temperature to the heating terminal, because the temperature detector is provided at the downstream side of the mixing device and at the upstream side of the heating terminal used by a user as a heating function, a hot water heating device with improved safety can be provided.

A third aspect of the present disclosure is particularly directed to the hot water heating device according to the first or second aspect, wherein the control device drives the circulating pump again after stopping the driving of the circulating pump.

This enables continuation of heating operation, so that a hot water heating device with improved usability can be provided.

A fourth aspect of the present disclosure is particularly directed to the hot water heating device according to any of the first to third aspects, the hot water heating device further including a display, wherein when stopping the driving of the circulating pump, the control device notifies the display of the driving stop of the circulating pump.

Even when the mixing device develops an operation failure for some reason or other to supply hot water having a high temperature to the heating terminal, since a user is allowed to continue heating operation while acknowledging the driving stop of the circulating pump, a hot water heating device which has improved usability and improved safety can be provided.

In the following, an exemplary embodiment of the present disclosure will be described with reference to the drawings. The exemplary embodiment does not limit the present disclosure.

### FIRST EXEMPLARY EMBODIMENT

In the following, an exemplary embodiment of the present disclosure will be described with reference to the drawings. First, with reference to FIG. 1, description will be made of a configuration of a hot water heating device according to the present exemplary embodiment.

As heat source machine 1, a heat pump type heat source machine is used. While R410A is used as a refrigerant in the present exemplary embodiment, other refrigerant may be used.

In heat source machine 1, there is provided a water-refrigerant heat exchanger (not shown) which transmits, to water, heat held by a refrigerant at a high-pressure side of a heat pump cycle.

Water in hot water storage tank 2 is conveyed by a circulating pump (not shown) included in heat source machine 1 via heat source forward piping 5 and after being heated by the water-refrigerant heat exchanger (not shown), the heated water is returned into hot water storage tank 2 via heat source return piping 6.

The hot water stored in hot water storage tank 2 is fed by circulating pump 8 to mixing device 7 as a mixing valve via heating forward piping 11. Low-temperature water whose heat has been dissipated at heating terminal 10 to have a lowered temperature is fed to mixing device 7 via heating return piping 12 and bypass piping 13 branched from heating return piping 12. The low-temperature water fed to mixing device 7 is mixed with the high-temperature water fed to mixing device 7 via heating forward piping 11 at a predetermined mixing ratio. As a result, hot water having a temperature set by a user by using remote controller 18 is supplied to heating terminal 10.

In other words, the low-temperature water whose heat has been dissipated at heating terminal 10 to have a lowered temperature is mixed at mixing device 7 with the high-temperature water fed to mixing device 7 via heating forward piping 11 at a predetermined mixing ratio. The low-temperature water whose heat has been dissipated at heating terminal 10 to have a lowered temperature is used for adjusting a temperature of hot water to be supplied to heating terminal 10.

Then, the low-temperature water which is not fed to mixing device 7 and is not used for mixture with the high-temperature water is returned to a lower part of hot water storage tank 2 via heating return piping 12 by circulating pump 8.

With the above configuration, a heat quantity held by the hot water in hot water storage tank 2 is used by heating terminal 10 and reduced. When a temperature detected by tank temperature detector 3 disposed in tank 2 is a predetermined value or below, the water in hot water storage tank 2 is conveyed via heat source forward piping 5 by the circulating pump (not shown) included in heat source machine 1 and is heated by the water-refrigerant heat exchanger (not shown). Thereafter, the heated water is returned into hot water storage tank 2 via heat source return piping 6. As a result, hot water storage tank 2 stores high-temperature water.

A temperature of the hot water to be fed to heating terminal 10 can be set by a user by using remote controller 18, and can be mainly set in a range from 35°C to 55°C.

Further, in the present exemplary embodiment, heater 4 as an auxiliary heat source is disposed in hot water storage tank 2. Since a capacity of a heat pump type heat source machine is decreased as an outside air temperature is decreased, heater 4 is used as an auxiliary heat source. When the water is heated using heater 4, a set heating temperature of the hot water in hot water storage tank 2 is in a range from 65°C to 85°C, so that high-temperature water can be stored.

As an auxiliary heat source meeting a reduction in an outside air temperature, an oil or gas boiler can be also used other than a heater. In such a case, an internal heat exchanger (not shown) is included in hot water storage tank 2, and hot water heated by the boiler is flown into the internal heat exchanger (not shown) to heat hot water in hot water storage tank 2.

Further, the hot water heating device according to the present exemplary embodiment includes solar heat panel 14 as an auxiliary heat source, solar heat panel temperature detector 15 which detects a temperature of hot water flowing through solar heat panel 14, and solar heat pump 16.

A temperature detected by solar heat panel temperature detector 15 and a temperature detected by tank temperature detector 3 are compared with each other, and when the temperature detected by solar heat panel temperature detector 15 is higher than the temperature detected by tank temperature detector 3, solar heat pump 16 is driven to heat hot water in hot water storage tank 2 with high-temperature water heated by solar heat panel 14.

Solar heat panel 14 enables a temperature of the hot water in hot water storage tank 2 to be heated up to 90°C (selectively from 70°C to 90°C).

Due to such a configuration as described above, when mixing device 7 develops an operation failure for some reason or other to prevent low-temperature water whose heat have been dissipated at heating terminal 10 from being mixed with high-temperature water at a predetermined mixing ratio, the high-temperature water is directly supplied to heating terminal 10. Therefore, the temperature of heating terminal 10 may increase above a temperature set by a user to reduce safety or usability.

In the present exemplary embodiment, therefore, temperature detector 9 which detects a temperature of hot water to be supplied to heating terminal 10 is disposed at a downstream side of mixing device 7 and at an upstream side of heating terminal 10. When a temperature detected by temperature detector 9 continues to be a predetermined temperature (e.g. set at 75°C) or above for a predetermined time (e.g. set to 5 minutes), control device 17 stops driving of circulating pump 8 for a fixed time period (e.g. set to 30 minutes), thereby suppressing a temperature increase of heating terminal 10. Although in the present exemplary embodiment, when the temperature detected by temperature detector 9 continues to be a predetermined temperature or above for a predetermined time period, driving of circulating pump 8 is stopped, but the present disclosure is not limited thereto. The driving of circulating pump 8 may be stopped when the temperature detected by temperature detector 9 is the predetermined temperature or above.

Such control enables provision of a hot water heating device with improved safety.

Additionally, control device 17 may drive circulating pump 8 again after stopping the driving of circulating pump 8 for a fixed time period. Thereafter, control may be performed to repeat operation of again stopping the driving of circulating pump 8 for a fixed time period when temperature detector 9 detects a predetermined temperature or above for a predetermined time.

Such control prevents the temperature of heating terminal 10 from lowering excessively by again driving circulating pump 8 after a lapse of a predetermined time period (e.g. set to 30 minutes) after the driving of circulating pump 8 is stopped. This enables provision of a hot water heating device with improved safety and usability.

Then, with a display provided in remote controller 18, when stopping the driving of circulating pump 8, control device 17 may notify the driving stop of circulating pump 8 to the display provided in remote controller 18.

Since this configuration enables heating operation to be continued while allowing a user to acknowledge driving stop of circulating pump 8, a hot water heating device with improved usability and safety can be provided.

As described in the foregoing, since the hot water heating device according to the present disclosure enables improvement in heat exchange efficiency, as well as enabling improvement in safety, the device is applicable to a hot water heating device using oil, gas, a heat pump or the like as a heat source.

## Claims

1. A hot water heating device comprising:
a heat source machine (1);
a hot water storage tank (2) which stores hot water heated by the heat source machine (1);
a heating terminal (10) having a heating function;
a circulating pump (8) which circulates hot water between the hot water storage tank (2) and the heating terminal (10);
a mixing device (7) which mixes the hot water to be conveyed from the hot water storage tank (2) to the heating terminal (10) with the hot water whose heat has been dissipated at the heating terminal (10); and
a control device (17),
**characterized in that**
a temperature detector (9) is provided at a downstream side of the mixing device (7) for detecting a temperature of the hot water circulating between the hot water storage tank (2) and the heating terminal (10);
wherein when the temperature detector (9) detects a predetermined temperature or above, the control device (17) stops driving of the circulating pump (8).

2. The hot water heating device according to claim 1, wherein the temperature detector (9) is provided at the downstream side of the mixing device (7) and at an upstream side of the heating terminal (10).

3. The hot water heating device according to claim 1 or 2, wherein the control device (17) again drives the circulating pump (8) after stopping driving of the circulating pump (8).

4. The hot water heating device according to any one of claims 1 to 3, further comprising a display,
wherein when stopping the driving of the circulating pump (8), the control device (17) notifies the display of the driving stop of the circulating pump (8).

## Patentansprüche

1. Warmwasserheizvorrichtung, enthaltend:
eine Heizquellenmaschine (1);
einen Warmwasserspeichertank (2), welcher Warmwasser speichert, das von der Heizquellenmaschine (1) erhitzt wurde;
eine Heizendeinrichtung (10) mit einer Heizfunktion;
eine Umwälzpumpe (8), welche Warmwasser zwischen dem Warmwasserspeichertank (2) und der Heizendeinrichtung (10) umwälzt;
eine Mischvorrichtung (7), welche das Warmwasser, das von dem Warmwasserspeichertank (2) zur Heizendeinrichtung (10) gefördert werden soll, mit dem Warmwasser, dessen Wärme an der Heizendeinrichtung dissipiert wurde, mischt; und
eine Steuervorrichtung (17),
**dadurch gekennzeichnet, dass**
ein Temperaturdetektor (9) an einer Abströmseite der Mischvorrichtung (7) vorgesehen ist, um eine Temperatur des Warmwassers, das zwischen dem Warmwasserspeichertank (2) und der Heizendeinrichtung (10) im Umlauf ist, zu detektieren;
wobei, wenn der Temperaturdetektor (9) eine vorbestimmte Temperatur oder darüber detektiert, die Steuervorrichtung (17) das Antreiben der Umwälzpumpe (8) anhält.

2. Warmwasserheizvorrichtung nach Anspruch 1, wobei der Temperaturdetektor (9) an einer Abströmseite der Mischvorrichtung (7) und an einer Zuströmseite der Heizendeinrichtung (10) vorgesehen ist.

3. Warmwasserheizvorrichtung nach Anspruch 1 oder 2, wobei die Steuervorrichtung (17) nach dem Anhalten des Antreibens der Umwälzpumpe (8) die Umwälzpumpe (8) wieder antreibt.

4. Warmwasserheizvorrichtung nach einem der Ansprüche 1 bis 3, die ferner eine Anzeige enthält,
wobei, wenn die Steuervorrichtung (17) das Antreiben der Umwälzpumpe (8) anhält, sie der Anzeige den Antriebshalt der Umwälzpumpe (8) meldet.

## Revendications

1. Dispositif de chauffage d'eau chaude comprenant:
une machine à source de chaleur (1);
un réservoir de stockage d'eau chaude (2) qui stocke de l'eau chaude chauffée par la machine à source de chaleur (1);
un terminal de chauffage (10) ayant une fonction de chauffage;
une pompe de circulation (8) qui fait circuler de l'eau chaude entre le réservoir de stockage d'eau chaude (2) et le terminal de chauffage (10);
un dispositif de mélange (7) qui mélange l'eau chaude à transporter du réservoir de stockage d'eau chaude (2) au terminal de chauffage (10) avec l'eau chaude dont la chaleur a été dissipée au niveau du terminal de chauffage (10); et
un dispositif de commande (17),
**caractérisé en ce que**
un détecteur de température (9) est disposé au niveau d'un côté aval du dispositif de mélange (7) pour détecter une température de l'eau chaude circulant entre le réservoir de stockage d'eau chaude (2) et le terminal de chauffage (10);
dans lequel, lorsque le détecteur de température (9) détecte une température prédéterminée ou supérieure, le dispositif de commande (17) arrête l'entraînement de la pompe de circulation (8).

2. Dispositif de chauffage d'eau chaude selon la revendication 1, dans lequel le détecteur de température (9) est disposé au niveau du côté aval du dispositif de mélange (7) et au niveau d'un côté amont du terminal de chauffage (10).

3. Dispositif de chauffage d'eau chaude selon la revendication 1 ou 2, dans lequel le dispositif de commande (17) entraîne à nouveau la pompe de circulation (8) après l'arrêt de l'entraînement de la pompe de circulation (8).

4. Dispositif de chauffage d'eau chaude selon l'une quelconque des revendications 1 à 3, comprenant en outre un dispositif d'affichage,
dans lequel, lors de l'arrêt de l'entraînement de la pompe de circulation (8), le dispositif de commande (17) notifie le dispositif d'affichage de l'arrêt d'entraînement de la pompe de circulation (8).
